# FASCICULE DE BREVET EUROPEEN

(11) **EP 1 338 807 B1**
(45) Date de publication et mention de la délivrance du brevet: **06.10.2004**
(21) Numéro de dépôt: 02006876.3
(22) Date de dépôt: 26.03.2002
(51) Int. Cl.: F16B 45/00, F16B 39/10

(54) **Dispositif d'ancrage pour systeme de securite anti-chute**
Verankerungsvorrichtung für ein Anti-Sturz Sicherheitssystem
Anchoring device for an anti-fall down security system

(30) Priorité: 21.02.2002 BE 200200111
(43) Date de publication de la demande: 27.08.2003
(73) Titulaire: Trendy S.P.R.L., 6180 Courcelles (BE)
(72) Inventeur: Brenez, Philippe, 1640 Rhode-St-Genese (BE)
(74) Mandataire: Cauchie, Daniel

(56) Documents cités:
- DE-C- 3 508 760
- DE-U- 20 021 334
- US-A- 4 135 693

## Description

La présente invention se rapporte, d'une manière générale, à un dispositif d'ancrage sur structure rigide verticale pour système de sécurité anti-chute (DE 20021334 A).

Plus précisément, l'invention concerne un dispositif d'ancrage pour système de sécurité anti-chute, à fixer sur structure rigide verticale au moyen d'une tige filetée munie d'un écrou, d'une tête de boulon et éventuellement d'un contre-écrou du type comportant une plaquette métallique recourbée formant deux ailes, l'une pourvue, à sa partie supérieure, d'un orifice circulaire pour passage de la tige filetée seule, l'autre comportant, à sa partie inférieure, un orifice configuré de manière à pouvoir assurer le passage de la tige filetée munie de la tête de boulon et éventuellement du contre-écrou et à permettre l'accrochage du système de sécurité anti-chute à ladite plaquette.

Afin d'assurer la sécurité d'un individu lors d'une progression le long d'une structure rigide verticale, l'utilisation d'un système anti-chute s'avère indispensable. L'arrimage de ce système à la membrure s'opère généralement par l'intermédiaire d'un dispositif d'ancrage, du type décrit précédemment, qui est boulonné, à cette membrure, via l'orifice circulaire au moyen d'un boulon.
Le retrait de ce dispositif, par exemple pour son remplacement, nécessite toutefois de déboulonner les boulons et de désolidariser complètement la membrure et les éléments s'y rapportant.

La présente invention a pour but de proposer un dispositif d'ancrage du type indiqué précédemment qui permette de remédier aux inconvénients précités c'est-à-dire qui puisse être fixé et enlevé aisément sans nécessité de procéder au retrait des boulons de la membrure et la désolidarisation de ses éléments, de façon à éviter toute perte de temps inutile.

Pour atteindre ce but, le dispositif selon l'invention est caractérisé en ce que les deux orifices communiquent mutuellement par un évidement dont les bords s'étendent tangentiellement à partir de l'orifice circulaire et parallèlement et en ce que la plaquette comporte, au niveau de sa face interne, une butée d'arrêt de forme circulaire centrée sur l'orifice circulaire s'étendant extérieurement à l'évidement à partir de ses bords et dont le diamètre est supérieur à celui du cercle dans lequel peut s'inscrire le contre-écrou ou la tête de boulon.

Selon une autre caractéristique de l'invention, la butée fait saillie de la face interne de la plaquette c'est-à-dire de la face située dans l'angle inférieur à 180°.

En outre, selon un mode de réalisation préféré, la butée est constituée d'une portion annulaire telle qu'une portion de rondelle métallique faisant saillie de la face interne de la plaquette.

Toutefois, selon une autre caractéristique de l'invention, la butée résulte d'une cavité pratiquée dans la plaquette par sa face interne.

L'invention sera mieux comprise et d'autres buts, caractéristiques et avantages de celle-ci apparaîtront plus clairement à la lumière de la description explicative ci-après faite en référence aux dessins schématiques annexés donnés uniquement à titre d'exemples illustrant des modes de réalisation de l'invention et dans lesquels :
- la figure 1 est une vue frontale d'un dispositif d'ancrage selon l'invention sous forme plane
- la figure 2 est une vue en perspective d'un dispositif d'ancrage selon l'invention posé sur un échelon et juxtaposé à une membrure
- la figure 3 est une vue en perspective du dispositif représenté à la figure 2, muni d'un contre-écrou en position de blocage

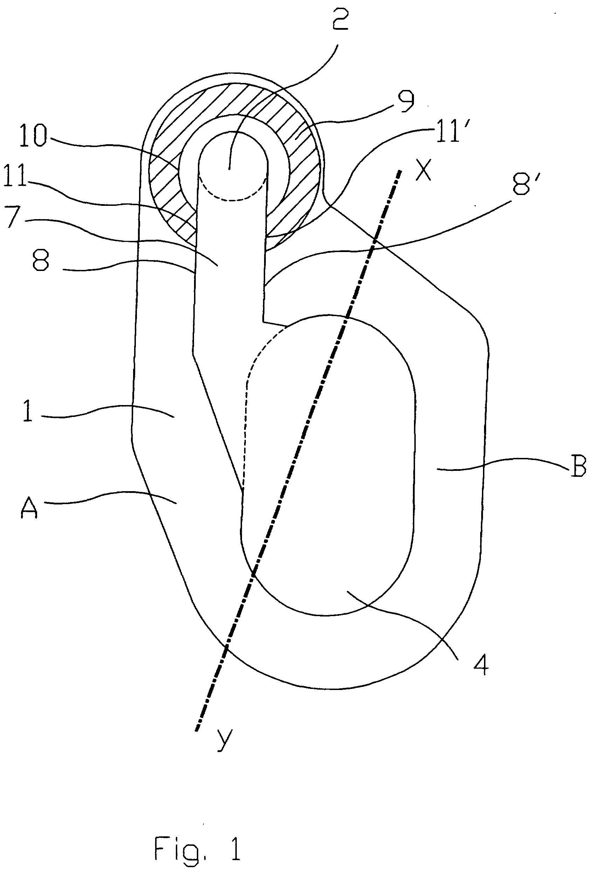

Ainsi, le dispositif selon l'invention comprend une plaquette 1, avantageusement métallique, représentée plane à la figure 1, dont la recourbure permanente selon l'axe X-Y définit deux ailes A et B, préférentiellement perpendiculaires.

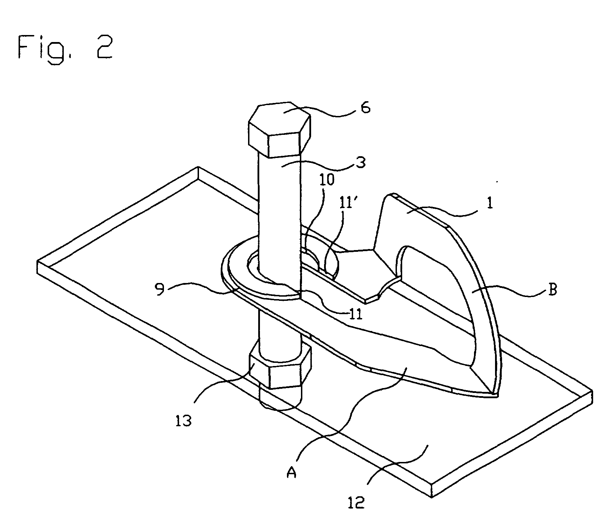

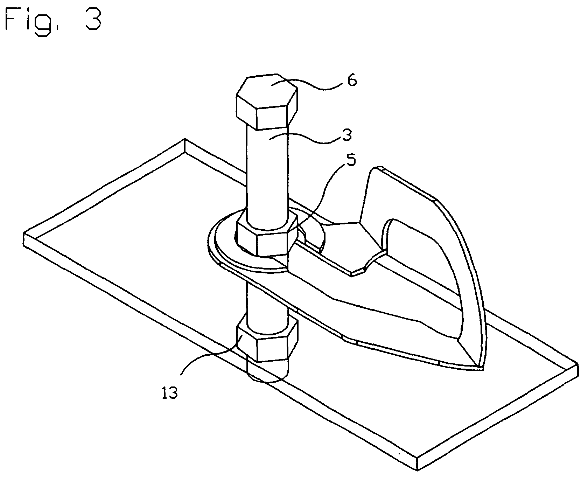

Les figures 2 et 3 montrent d'ailleurs clairement cette recourbure.

L'axe de recourbure X-Y est avantageusement choisi de manière que l'aile B se trouve en position oblique par rapport à la verticale.

D'autre part, l'aile A est pourvue d'un orifice circulaire 2 pour le passage d'une tige filetée 3, représentée aux figures 2 et 3, de même diamètre, tandis que l'aile B comporte également un orifice 4 de dimension suffisante pour permettre le passage de la même tige filetée 3 munie d'un contre-écrou 5 et d'une tête de boulon 6.

Tel que représenté également à la figure 1, l'orifice circulaire 2 communique avec l'orifice 4 par l'intermédiaire d'un canal sous la forme d'un évidement 7 dont les bords 8 et 8' s'éloignent tangentiellement de cet orifice circulaire 2 jusqu'à faire jonction avec l'orifice 4.

Conformément à l'invention, la plaquette 1 comprend en outre une butée 9 faisant saillie de la face interne de l'aile A. Cette butée 9, dont le front de butée 10 est de forme circulaire, prend l'aspect d'une portion de rondelle, avantageusement métallique, centrée sur l'orifice circulaire 2 et solidaire de la plaquette 1 par boulonnage ou soudure.

Alternativement cette portion de rondelle peut être construite par usinage de la plaquette 1.

Cette butée 9 est configurée de manière que ses bords latéraux 11 et 11' affleurent aux bords 8 et 8' de l'évidemment. 7 et que son diamètre intérieur soit à la fois supérieur à celui de l'orifice circulaire 2 et semblable au diamètre du cercle dans lequel s'inscrit le contre-écrou 5 solidaire de la tige filetée 3.

En se référant notamment aux figures 2 et 3, on voit que le dispositif d'ancrage selon l'invention, peut être fixé sur un ensemble pré-existant formé d'une membrure 12 et d'un échelon boulonné constitué de la tige filetée 3 munie de la tête de boulon 6 de l'écrou 13 et du contre-écrou 5.

Lors de la pose de la plaquette 1 sur cet ensemble, l'écrou 13 est desserré en suffisance pour, après traction sur la tige filetée 3, libérer le contre-écrou 5 qui s'éloigne de la membrure 12 d'une distance supérieure à l'épaisseur de la plaquette 1.

La tête de boulon 6 d'abord, la tige filetée 3 ensuite et le contre-écrou 5 finalement sont alors engagés dans l'orifice 4 de la plaquette 1 amenée en butée contre la membrure 12. Par translation de la plaquette 1 perpendiculairement à l'axe de la tige filetée 3, cette tige filetée est forcée à coulisser dans le canal formé par l'évidemment 7 jusqu'à épouser le contour de l'orifice circulaire 2.

La tige filetée 3 est alors repoussée dans la direction de la membrure 12 jusqu'à ce que le contre-écrou 5 arrive en butée contre la plaquette 1.

L'écrou 13 est alors resserré contre la membrure 12 de sorte que le contre-écrou 5 maintenu sur la tige filetée 3 et en butée contre la face 10 de la portion de rondelle 9 provoque le blocage de tout mouvement de la plaquette 1 dans l'axe de la tige filetée 3 ou perpendiculairement à celle-ci.

Par la suite, le système de sécurité anti-chute, généralement constitué d'un ensemble formé de cordes, coulisseau et mousqueton, peut être arrimé à la plaquette 1 par accrochage du mousqueton via l'orifice 4.

Si nécessaire, la dépose du dispositif d'ancrage ainsi fixé par juxtaposition- à la membrure 12 peut s'effectuer en exécutant les opérations inverses à celles décrites ci-dessus et dans un ordre inversé.

Après la lecture de ce qui précède, on comprend que la pose et la dépose du dispositif d'ancrage selon l'invention permet, à l'utilisateur, de gagner un temps appréciable lors de ces opérations et garantit la bonne tenue de l'ancrage à sa fixation. En outre, la conception ergonomique du dispositif selon l'invention qui se trouve fixé par juxtaposition à la membrure, en position oblique par rapport à la verticale et sous les échelons existants ne provoque aucune gêne lors de la montée d'un individu le long de la membrure ni lors des opérations d'accrochage et de décrochage.

## Revendications

1. Dispositif d'ancrage, pour système de sécurité anti-chute, à fixer sur structure rigide verticale au moyen d'une tige filetée (3) munie d'un écrou (13), d'une tête de boulon (6) et éventuellement d'un contre-écrou (5), du type comportant une plaquette métallique (1) recourbée formant deux ailes (A, B), l'une pourvue, à sa partie supérieure, d'un orifice circulaire (2) pour passage de la tige filetée seule, l'autre comportant, à sa partie inférieure, un orifice (4) configuré de manière à pouvoir assurer le passage de la tige filetée munie de la tête de boulon et éventuellement du contre-écrou et à permettre l'accrochage du système de sécurité anti-chute à ladite plaquette, **caractérisé en ce que** les deux orifices communiquent mutuellement par un évidement (7) dont les bords s'étendent tangentiellement à partir de l'orifice circulaire (2) et parallèlement et **en ce que** la plaquette (1) comporte, au niveau de sa face interne, une butée d'arrêt (9) de forme circulaire centrée sur l'orifice circulaire (2) s'étendant extérieurement à l'évidement (7) à partir de ses bords (8, 8') et dont le diamètre est supérieur à celui du cercle dans lequel peut s'inscrire le contre-écrou (5) ou la tête de boulon (6).

2. Dispositif d'ancrage selon la revendication 1, **caractérisé en ce que** la butée fait saillie de la face interne de la plaquette.

3. Dispositif d'ancrage selon les revendications 1 ou 2, **caractérisé en ce que** la butée est constituée d'une portion de rondelle métallique.

4. Dispositif d'ancrage selon la revendication 1, **caractérisé en ce que** la butée résulte d'une cavité pratiquée dans la plaquette par sa face interne.

## Patentansprüche

1. Verankerungsvorrichtung für ein Absturzsicherungssystem, anzubringen an einer starren, senkrechten Struktur mit Hilfe einer Gewindestange (3), die mit einer Mutter (13), einem Schraubenkopf (6) und eventuell einer Gegenmutter (5) versehen ist. Die Verankerungsvorrichtung umfasst eine gebogene Metallplatte (1) mit zwei Flügeln (A, B), von denen der eine im oberen Teil eine runde Öffnung (2) zum Durchschieben nur der Gewindestange aufweist, während der andere im unteren Teil mit einer Öffnung (4) versehen ist, die so gestaltet ist, dass die Gewindestange mitsamt dem Schraubenkopf und eventuell mit der Gegenmutter hindurchgeführt werden kann. Das Absturzsicherungssystem kann an der Metallplatte befestigt werden, die sich **dadurch kennzeichnet, dass** die beiden Öffnungen durch eine Aussparung (7) miteinander verbunden sind, deren Ränder tangential von der runden Öffnung (2) ausgehen und parallel verlaufen, und dadurch, dass die Metallplatte auf ihrer Innenseite einen runden, um die runde Öffnung (2) zentrierten Anfahrstopp (9) aufweist, der von den Rändern der Aussparung (8, 8') nach außen hin verläuft, und dessen Durchmesser größer ist, als der des Kreises, der die Gegenmutter (5) oder den Schraubenkopf (6) aufnehmen kann.

2. Verankerungsvorrichtung nach Forderung 1, **gekennzeichnet dadurch, dass** der Anfahrstopp einen Vorsprung an der Innenseite der Metallplatte bildet.

3. Verankerungsvorrichtung nach den Forderungen 1 und 2, **gekennzeichnet dadurch, dass** der Anfahrstopp aus einem Teil einer metallenen Unterlegscheibe besteht.

4. Verankerungsvorrichtung nach Forderung 1, **gekennzeichnet dadurch, dass** der Anfahrstopp durch eine Vertiefung auf der Innenseite der Metallplatte gebildet wird.

## Claims

1. Anchor device for a fall-prevention device intended to be fixed on a vertical rigid structure by means of a threaded rod (3) provided with a nut (13), a bolt head (6) and optionally with a locknut (5) comprising a curved metallic plate (1) forming two wings (A, B), one being provided, on its upper face, with a circular aperture (2) allowing the passage of the only threaded rod, the other one being provided, on its lower face, with an aperture (4) shaped so as to insure the passage of the threaded rod equipped with the bolt head and optionally with a locknut so as to allow the hooking of the fall-prevention device to said plate, wherein the two apertures are connected together through a recess (7) the edges of which extend tangentially from the circular aperture (2) and in a parallel direction and wherein said plate (1) comprises on its internal face a circular stop (9) adjusted on the circular aperture (2), extending externally to the recess (7) from the edges (8, 8') and the diameter of which is higher than the one of the circle into which the locknut (5) and the bolt head (6) can take place.

2. Anchor device according to claim 1 wherein the stop overhangs the internal face of the plate.

3. Anchor device according to claims 1 or 2 wherein the stop is made of a portion of a metal washer.

4. Anchor device according to claim 1 wherein the stop results from a cavity excavated in the plate by its internal face.
